# FASCICULE DE BREVET EUROPEEN

(11) **EP 3 361 601 B1**
(45) Date de publication et mention de la délivrance du brevet: **04.11.2020**
(21) Numéro de dépôt: 18155108.6
(22) Date de dépôt: 05.02.2018
(51) Int. Cl.: B60L 7/18, H02J 7/14

(54) **PROCÉDÉ DE GESTION DE L'ÉTAT DE CHARGE D'UNE BATTERIE DE TRACTION D'UN VÉHICULE HYBRIDE**
VERFAHREN ZUR VERWALTUNG DES LADESTATUMS EINER TRAKTIONSBATTERIE EINES HYBRIDFAHRZEUGS
METHOD FOR MANAGING THE CHARGE STATE OF A TRACTION BATTERY IN A HYBRID VEHICLE

(30) Priorité: 08.02.2017 FR 1751027
(43) Date de publication de la demande: 15.08.2018
(73) Titulaire: RENAULT s.a.s., 92100 Boulogne-Billancourt (FR)
(72) Inventeur: FERREIRA DE ARAUJO, Manoela, 94230 CACHAN (FR); KETFI-CHERIF, Ahmed, 78990 ELANCOURT (FR); NAIR, Karima, 78000 VERSAILLES (FR)

(56) Documents cités:
- EP-A1- 2 221 949
- FR-A1- 2 976 418
- US-A1- 2015 069 938
- US-B2- 8 874 295

## Description

La présente invention concerne un procédé de gestion de l'état de charge d'une batterie.

L'invention s'applique préférentiellement à une batterie de traction d'un véhicule hybride équipé d'un groupe motopropulseur hybride, comprenant un moteur thermique et au moins une machine électrique destinés à assurer simultanément, ou indépendamment, la transmission d'un couple aux roues motrices du véhicule.

L'invention s'applique de manière non limitative à une batterie de traction mise en œuvre dans une architecture de groupe motopropulseur hybride nécessitant, lors d'une phase de mise en mouvement ou « décollage » à partir de l'arrêt et aux faibles vitesses de déplacement du véhicule, que la puissance fournie aux roues provienne exclusivement de la batterie de traction du véhicule. C'est le cas dans certaines architectures où, par construction, le moteur thermique ne peut intervenir dans la propulsion du véhicule qu'à partir d'une vitesse véhicule seuil prédéterminée, de sorte que le groupe motopropulseur ne dispose que de l'énergie électrique stockée dans la batterie de traction du véhicule pour assurer la mise en mouvement et le déplacement du véhicule jusqu'à l'atteinte de ladite vitesse véhicule seuil prédéterminée à laquelle le moteur thermique peut intervenir.

Dans cette phase de « décollage », le moteur thermique ne peut ni participer à la traction, ni recharger la batterie. De ce fait, si l'état de charge de la batterie de traction descend trop bas, en dessous d'un seuil prédéfini, une immobilisation temporaire du véhicule sera nécessaire pour activer un mode de recharge de la batterie de traction à l'arrêt du véhicule.

Or, dans des conditions de roulage de type embouteillage ou montée de col à faible vitesse, il peut devenir difficile de maintenir l'état de charge de la batterie au-dessus du seuil lui permettant d'assurer le niveau de puissance minimal requis.

La contribution des accessoires électriques sera en outre un facteur aggravant de nature à accélérer la décharge de la batterie de traction. Enfin, la température est également un facteur à considérer, dans la mesure où elle influe sur l'énergie électrique effectivement disponible pour la traction.

Dans certains cas d'usage, la loi de gestion de l'énergie, connue sous l'abréviation LGE, appliquée par le calculateur dédié à la gestion de la batterie ne permet pas de maintenir la batterie dans des conditions qui lui permettront de fournir le niveau de puissance minimal requis. Autrement dit, la loi de gestion de l'énergie LGE n'est pas suffisante pour réguler l'état de charge de la batterie.

Le véhicule se trouve alors potentiellement en situation d'immobilisation temporaire, dans laquelle la batterie de traction est incapable de fournir la puissance de traction requise pour assurer le décollage du véhicule à partir de l'arrêt et aux basses vitesses de déplacement du véhicule.

A cet effet, on connaît notamment le document US 8,874,295 qui divulgue un procédé de commande pour ralentir la baisse du niveau de charge de la batterie d'un véhicule électrique hybride. Dans ce document, un procédé désactive, en fonction du niveau de charge de la batterie, des prestations d'assistances accessoires, par exemple les fonctions d'aide à la conduite (« *Drive Assist* » en anglais) ou d'aide au passage de vitesse (« *Gear Shift Assist* » en anglais), pour réduire la vitesse de décharge de la batterie.

Cependant, un inconvénient de ce procédé est qu'il ne permet pas la recharge de la batterie, mais il permet uniquement de ralentir la décharge de la batterie, jusqu'à ce que cette dernière soit intégralement déchargée.

On connaît également du document FR2976418A1 un procédé de recharge de la batterie d'un véhicule hybride proposant, dans les cas d'usages les plus fréquents, d'activer un système de freinage de récupératif seul ou d'activer un système de freinage récupératif en combinaison avec un système de recharge active utilisant l'énergie du moteur thermique. Un inconvénient de cette solution est que, dans certains cas d'usage dégradés, notamment en cas de décélération très forte après à une utilisation sévère du véhicule, le freinage récupératif est inutilisable et elle propose alors de purement et simplement limiter les performances d'accélération du véhicule pour préserver l'état de charge de la batterie.

Aussi, il existe le besoin d'une solution pour permettre la recharge des batteries de traction d'un véhicule automobile lorsque la loi de gestion de l'énergie n'est pas suffisante pour réguler l'état de charge de la batterie.

On propose un procédé de gestion de l'état de charge d'une batterie d'accumulateurs électriques d'un véhicule automobile hybride comprenant au moins une batterie d'accumulateurs électriques et un moteur thermique, ledit procédé comprenant :
- une étape de réception d'une valeur d'état de charge de ladite batterie,
- une étape de comparaison de ladite valeur d'état de charge avec une valeur de seuil minimum;
le procédé comprenant en outre une succession d'étapes d'activation de moyens de recharge aptes à augmenter ladite valeur d'état de charge de la batterie, chaque étape d'activation étant mise en œuvre, lorsque ladite valeur d'état de charge est inférieure à ladite valeur de seuil minimum, en fonction d'une estimation d'une quantité d'énergie accumulée par la batterie depuis l'activation du moyen de recharge activé au cours de l'étape d'activation précédente.

Ainsi, on peut augmenter l'état de charge de la batterie, en activant de manière graduelle des moyens de recharge prédéfinis. Les moyens de recharge étant activés, de manière successive, ou séquentielle, en fonction de la quantité d'énergie accumulée par la batterie depuis l'activation d'un moyen de recharge précédent. Ainsi, on peut adapter le nombre de moyens de recharge activés en fonction de l'état de charge de la batterie et de la capacité de chacun des moyens de recharge à restaurer l'état de charge de la batterie à une valeur de seuil prédéfinie.

Une première étape d'activation est mise en œuvre indépendamment d'une autre étape d'activation.

Deux mises en œuvre de deux étapes d'activation successives sont espacées d'une durée de recharge prédéfinie, pour permettre à la batterie d'accumuler une quantité d'énergie suite à l'activation du dernier moyen de recharge activé.

La première étape d'activation active un premier moyen de recharge comprenant l'augmentation d'un niveau de recharge de la batterie autorisé. Ainsi, on peut augmenter temporairement, le niveau de recharge de la batterie, ce qui favorise une recharge plus rapide et permet de remédier rapidement à une diminution faible du niveau de charge de la batterie en deçà du seuil minimal.

Une deuxième étape d'activation active un deuxième moyen de recharge, comprenant la baisse d'une valeur de seuil de régime minimum pour le crabotage du moteur thermique aux roues et/ou l'autorisation de modes de fonctionnement dégradés du moteur thermique. Ainsi, on peut augmenter la recharge de la batterie en agissant directement sur le fonctionnement du moteur thermique et/ou de la machine électrique.

Une troisième étape d'activation active un troisième moyen de recharge comprenant une limitation progressive d'un paramètre commandant les performances de décharge de la batterie jusqu'à ce que ce paramètre atteigne une valeur de seuil minimale de performance de décharge. Cette troisième étape d'activation permet ainsi de régler de manière progressive et donc optimisée, la gestion des performances de décharge de la batterie, afin de favoriser la recharge rapide de la batterie.

Avantageusement et de manière non limitative, une quatrième étape d'activation active un quatrième moyen de recharge comprenant l'autorisation d'un niveau de recharge de la batterie augmenté par rapport au premier moyen de recharge. Ainsi, on peut, lorsque la batterie présente une décharge importante, agir de manière forte sur le niveau de recharge de la batterie, ce qui permet une recharge rapide et de forte valeur, de la batterie.

Avantageusement et de manière non limitative, après la mise en œuvre d'une étape d'activation parmi la succession d'étapes d'activation, le procédé met en œuvre une autre étape de réception d'une autre valeur d'état de charge de ladite batterie, et une étape de comparaison terminale entre ladite autre valeur d'état de charge reçue et une valeur de seuil cible, adaptée pour pouvoir désactiver l'ensemble des moyens de recharge en fonction de ladite autre valeur d'état de charge de ladite batterie. Ainsi, chaque étape d'activation est suivi, préférentiellement après une période de temps prédéfinie, permettant à la batterie d'accumuler de l'énergie, d'une étape de mise à jour des paramètres d'état de charge, afin de décider s'il convient ou non d'activer une autre étape d'activation, augmentant alors la vitesse et la capacité de recharge de la batterie.

Avantageusement et de manière non limitative, ladite étape de comparaison terminale comprend la désactivation de l'ensemble des moyens de recharge précédemment activés lorsque l'autre valeur d'état de charge est supérieure ou égale à ladite valeur de seuil cible. Ainsi, lorsque la batterie présente un état de charge supérieur à la valeur de seuil cible, l'ensemble des moyens de recharge sont désactivés, ce qui restaure le fonctionnement du véhicule dans l'état précédent l'activation du premier moyen de recharge.

L'invention concerne aussi un dispositif de gestion de l'état de charge d'une batterie d'accumulateurs électriques d'un véhicule automobile hybride comprenant au moins une batterie d'accumulateurs électriques et un moteur thermique, ledit dispositif comprenant :
- un organe de réception d'une valeur d'état de charge de ladite batterie,
- un organe de comparaison apte à comparer ladite valeur d'état de charge avec une valeur de seuil ;
- un organe d'estimation adapté pour estimer une valeur de quantité d'énergie accumulée par la batterie au cours d'une période de temps,
caractérisé en ce que le dispositif de gestion comprend un organe d'activation apte à activer successivement une pluralité de moyens de recharge, chaque activation d'un moyen de recharge étant fonction d'une quantité d'énergie accumulée par la batterie, estimée par l'organe d'estimation, depuis l'activation précédente d'un autre moyen de recharge.

L'invention concerne aussi un véhicule automobile hybride comprenant une batterie d'accumulateurs électriques, un moteur thermique et un dispositif de gestion tel que décrit précédemment.

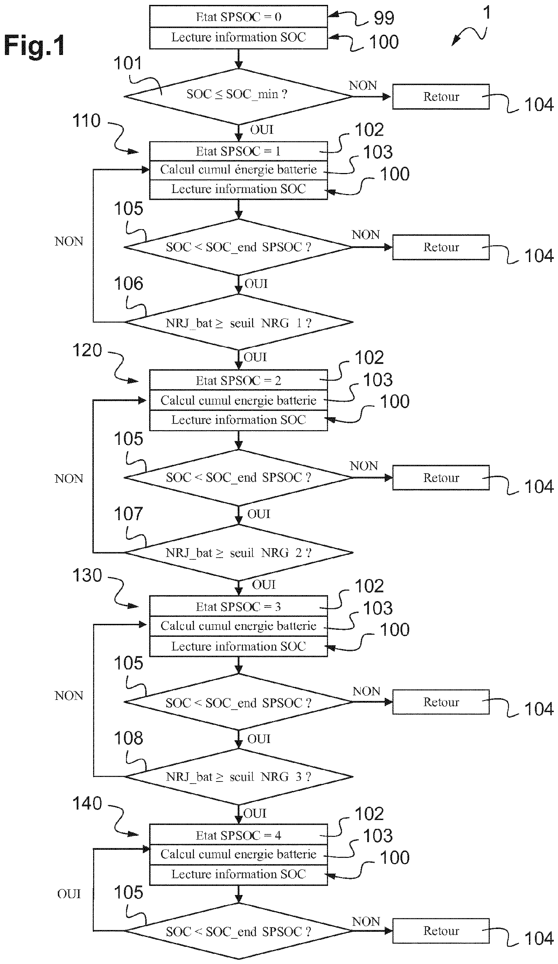

D'autres particularités et avantages de l'invention ressortiront à la lecture de la description faite ci-après d'un mode de réalisation particulier de l'invention, donné à titre indicatif mais non limitatif, en référence à la figure 1 qui est un organigramme représentatif du procédé de gestion de l'état de charge d'une batterie.

En référence à la figure 1, selon un mode de réalisation de l'invention, on met en œuvre un procédé de gestion 1 de l'état de charge SOC d'un accumulateur électrique, aussi appelé batterie, d'un véhicule automobile hybride.

Un véhicule automobile hybride comprend un moteur thermique et une machine électrique électriquement alimentée par au moins une batterie d'accumulateurs électriques, plus simplement appelée batterie.

Le véhicule automobile comporte en outre un dispositif de gestion de l'état de charge SOC de la batterie d'accumulateurs électriques comprenant un organe de réception d'une valeur d'état de charge SOC de la batterie et un organe de comparaison pour comparer l'organe de réception de l'état de charge SOC avec une valeur de seuil minimum SOC_{MIN} de l'état de charge.

L'organe de comparaison est par exemple être un micro-processeur associé à une mémoire et des ports de communication avec l'organe de réception, un microcontrôleur, un calculateur embarqué ou tout autre système électronique adapté.

Le dispositif de gestion comprend aussi un organe d'estimation adapté pour estimer une valeur de quantité d'énergie accumulée par la batterie au cours d'une période de temps donnée.

L'organe d'estimation est par exemple être un micro-processeur associé à une mémoire et des ports de communication avec l'organe de réception, un microcontrôleur, un calculateur embarqué ou tout autre système électronique adapté. Il peut par exemple partager les mêmes ressources électroniques ou des ressources similaires à l'organe de comparaison, par exemple en partageant un même processeur.

Le dispositif de gestion comprend en outre un organe d'activation, par exemple un micro-processeur, un microcontrôleur, un calculateur embarqué ou tout autre dispositif électronique adapté, distinct ou identique à celui de l'organe de comparaison et/ou de l'organe d'estimation, adapté pour commander l'activation d'au moins un moyen de recharge parmi une pluralité de moyens de recharge pour augmenter l'état de charge SOC de la batterie.

L'organe d'activation comprend à cet effet des ports de communications, ou tout autre moyen de communication adapté pour communiquer, et en particulier ordonner l'activation de moyens de recharge permettant la gestion de l'état de charge de la batterie à gérer.

On entend par moyen de recharge, tout moyen influant sur la loi de gestion d'énergie de la batterie, sur le comportement du véhicule, sur l'agrément de conduite, et d'une manière plus générale sur un paramètre de fonctionnement du véhicule, et qui permet par son action d'augmenter l'état de charge de la batterie.

Dans ce mode de réalisation, les moyens de recharge sont :
1. Commander l'autorisation d'une augmentation du niveau de recharge de la batterie dans la loi de gestion de l'énergie, connue sous l'abréviation LGE, de la batterie ;
2. Baisser le seuil de régime minimum pour le crabotage du moteur thermique aux roues et/ou baisser l'autorisation de modes de fonctionnement dégradés du moteur thermique ;
3. Limiter progressivement un paramètre commandant les performances de décharge de la batterie jusqu'à ce que ce paramètre atteigne une valeur de seuil minimale de performance de décharge ;
4. Autoriser un niveau de recharge de la batterie augmenté par rapport au 1^{er} moyen de recharge cité ci-dessus.

Cependant les moyens de recharges énoncés ci-dessus ne constituent pas une liste exhaustive, et leur ordre, bien qu'étant celui dans lequel ils seront successivement activés dans ce mode de réalisation, n'est pas limitatif.

Le dispositif de gestion est configuré pour mettre en œuvre un procédé 1 de gestion de l'état de charge SOC de la batterie.

Dans une étape préalable 9 du procédé 1 de gestion, une variable d'état SPSOC, représentative de la stratégie employée pour restaurer le niveau de charge de la batterie, est initialisée à zéro.

La variable d'état SPSOC est utilisée dans la suite du procédé 1 pour définir les moyens de recharge qui seront activés par l'organe d'activation afin de restaurer le niveau de charge de la batterie.

Dans ce mode de réalisation, la variable d'état SPSOC est une variable numérique pouvant être incrémentée à mesure que des moyens de recharge sont activés.

Étant donné que plus le niveau d'énergie de la batterie est faible plus on souhaite activer de moyens de recharge, alors plus le niveau d'énergie de la batterie est faible, plus la valeur numérique de la variable d'état SPSOC sera incrémentée au cours du procédé objet de l'invention.

Autrement dit, le nombre de moyens de recharges qui seront activés au cours du procédé est inversement proportionnel à la quantité d'énergie restante estimée.

Cependant, selon des alternatives de réalisation, la variable d'état SPSOC, peut être de toute autre type de donnée adapté, par exemple un tableau de variables booléennes, un tableau de valeurs numériques ou encore, à titre non limitatif, une chaîne alphanumérique.

L'initialisation de la variable d'état SPSOC à zéro lors de l'étape préliminaire, est couplée à une vérification qu'aucun moyen de recharge n'est activé.

Ensuite, on met en œuvre une étape de réception 100 d'une valeur d'état de charge SOC de la batterie.

Puis on compare, au cours d'une étape de comparaison 101, la valeur d'état de charge SOC avec la valeur de seuil minimum SOC_{MIN} de l'état de charge.

La valeur de seuil minimum SOC_{MIN} de l'état de charge est dans ce mode de réalisation déterminée de sorte qu'en deçà de ce seuil, la batterie n'est plus suffisamment chargée pour fournir le niveau de puissance minimal requis notamment pour le démarrage du véhicule automobile.

Si la valeur d'état de charge SOC est supérieure à la valeur de seuil minimum SOC_{MIN}, alors la variable d'état SPSOC n'est pas incrémentée, et le procédé est réinitialisé 104.

La réinitialisation 104 du procédé comprend notamment la désactivation de tous les moyens de recharge précédemment activés, la remise à zéro de la variable d'état SPSOC et le retour à la première étape du procédé 1 qui commence par une étape de réception 100 d'une valeur d'état de charge SOC de la batterie.

On peut avantageusement mettre en œuvre une hystérésis sur l'état de charge SOC de la batterie avant de réinitialiser le procédé 1. Ceci permet d'éviter des bagotements entre la réinitialisation 104 du procédé 1 et l'activation 110 du premier moyen de recharge.

Si la valeur d'état de charge SOC est inférieure ou égale à la valeur de seuil minimum SOC_{MIN} de l'état de charge, alors la variable d'état SPSOC est incrémentée 102, et prend alors la valeur SPSOC = 1.

L'incrémentation 102 de la variable SPSOC à 1, est couplée à l'activation de premier niveau 110 d'un premier moyen de recharge.

Le premier moyen de recharge, auquel on se référera comme étant le moyen de recharge de premier niveau, commande l'autorisation d'une première augmentation du niveau de recharge de la batterie dans la loi de gestion de l'énergie, connue sous l'abréviation LGE, de la batterie.

Autrement dit, l'organe d'activation est ici configuré pour communiquer avec le dispositif commandant la loi de gestion d'énergie de la batterie, pour en modifier des paramètres fonctionnels, dont le niveau de recharge autorisé.

L'activation de premier niveau 110 du premier moyen de recharge est dans ce mode de réalisation associée à une indication au conducteur, via une interface homme-machine, l'informant que l'état de charge SOC de la batterie a atteint la valeur de seuil minimum SOC_{MIN} de l'état de charge.

Une fois le premier moyen de recharge activé, on peut prévoir de procéder à une pause temporelle du procédé allant d'une dizaine de secondes à quelques minutes, afin de permettre l'accumulation d'énergie dans la batterie.

Puis on procède à l'estimation 103 d'une valeur de quantité d'énergie accumulée NRJ_bat dans la batterie depuis l'activation de ce premier moyen de recharge.

La valeur d'énergie accumulée NRJ_bat est mise en mémoire, ou stockée par tout moyen adapté.

On compare ensuite au cours d'une étape de comparaison terminale 105 la valeur d'état de charge SOC avec une valeur d'état de charge cible SOC_{END}.

Si la valeur de charge SOC est supérieure ou égale à la valeur d'état de charge cible SOC_{END}, alors l'état de charge SOC de la batterie est revenu à un niveau suffisant, de sorte que le procédé 1 est terminé et réinitialisé.

Si la valeur de charge SOC est inférieure à la valeur d'état de charge cible SOC_{END}, alors on procède à une comparaison énergétique 104 entre la quantité d'énergie accumulée NRJ_bat dans la batterie depuis l'activation 110 du moyen de recharge de premier niveau avec une valeur de seuil énergétique de premier niveau SEUIL_NRG_1.

La valeur de seuil énergétique de premier niveau SEUIL_NRG_1 correspond à une valeur limite haute d'énergie accumulée par la batterie après l'activation du moyen de recharge de premier niveau.

Autrement dit, lorsque la quantité d'énergie accumulée NRJ_bat atteint la valeur de seuil énergétique de premier niveau SEUIL_NRG_1, le moyen de recharge de premier niveau ne sera pas suffisant à lui seul pour permettre à l'état de charge SOC de la batterie de remonter au-delà de la valeur d'état de charge cible SOC_{END}. Aussi, dans ce cas on procède à l'activation 120 d'un deuxième moyen de recharge de la batterie.

Dans ce mode de réalisation le deuxième moyen de recharge comprend la baisse du seuil de régime minimum pour le crabotage du moteur thermique aux roues et/ou l'autorisation de modes de fonctionnement dégradés du moteur thermique.

Les étapes suivant l'activation 110 du premier moyen de recharge se répètent après l'activation 120 du deuxième moyen de recharge. Ainsi, on va attendre une durée de temps prédéfinie pour laisser la batterie se recharger suite à l'activation 120 du deuxième moyen de recharge, puis on procède à une étape de comparaison terminale 105 et à une étape de comparaison énergétique 104 avec une valeur de seuil de deuxième niveau seuil_NRG_2 déterminée en fonction du deuxième moyen de recharge activé et du premier moyen de recharge activé.

En effet, le deuxième moyen de recharge ne se substitue pas au premier moyen de recharge, mais s'ajoute au premier moyen de recharge. Ainsi, lorsqu'il ressort que le premier moyen de recharge n'est pas suffisant pour permettre à l'état de charge de la batterie de repasser au-delà de la valeur d'état de charge cible SOC_{END}, on ajoute en supplément un deuxième moyen de recharge.

Si au cours de l'étape de comparaison énergétique 104 pour le deuxième moyen de recharge, la quantité d'énergie accumulée NRJ_bat est supérieure ou égale à la valeur de seuil énergétique de deuxième niveau SEUIL_NRG_2, on procède alors à l'activation 130 d'un troisième moyen de recharge.

Dans ce mode de réalisation le troisième moyen de recharge comprend une limitation progressive d'un paramètre commandant les performances de décharge de la batterie jusqu'à ce que ce paramètre atteigne une valeur de seuil minimale de performance de décharge.

Le troisième moyen de recharge peut être mis en œuvre de différentes manières.

Dans ce mode de réalisation, le troisième moyen de recharge limite la puissance batterie maximum autorisée en décharge. Si la valeur d'état de charge SOC de la batterie est inférieure à une valeur de seuil minimum, ici la valeur de seuil minimum SOC_{MIN} de l'état de charge, ou à titre d'alternative une autre valeur de seuil minimum, alors on réduit de manière linéaire les performances de décharge la batterie (action connue sous le nom anglo-saxon de *derating*), de sorte que le gradient varie en fonction de la moyenne glissante de la puissance batterie. De cette manière, plus la batterie est déchargée, plus le gradient de limitation est important.

Ainsi, le gradient de limitation est toujours négatif ou nul tant que la valeur d'état de charge SOC de la batterie est inférieure à la valeur de seuil minimum SOC_{MIN}.

Par convention, on considère qu'un taux de derating à 100% indique l'absence de limitation et donc une puissance de batterie Pbat_pax maximum autorisée en décharge nominale, tandis qu'un taux de derating à 0% indique une limitation maximale et donc une puissance de batterie Pbat_pax maximum autorisée en décharge à son minimum.

Si la valeur d'état de charge est supérieure à la valeur de seuil minimum SOC_{MIN} de l'état de charge, mais est inférieure à cette valeur de seuil minimum SOC_{MIN} de l'état de charge auquel est ajoutée une hystérésis, alors on commande une réduction progressive de la limitation des performances de décharge la batterie, autrement dit une augmentation du taux de derating.

Le taux de derating est de cette manière fonction de l'état de charge SOC de la batterie de telle sorte que lorsque l'état de charge SOC atteint la valeur de seuil minimum SOC_{MIN} de l'état de charge auquel est ajouté une hystérésis, alors la batterie n'est plus limitée dans sa décharge.

Cependant, tant que la valeur d'état de charge SOC est maintenue dans les limites de l'hystérésis, on ne réduit pas le taux de derating de la batterie, autrement dit, on ne réduit pas les performances en décharge la batterie.

Cependant, il est possible de définir les limitations en fonction de l'état de charge SOC ou de toute autre information représentative de l'état de charge SOC de la batterie, par exemple la puissance de la batterie Pbat.

La puissance de la batterie Pbat est notamment employée lorsque l'information d'état de charge SOC de la batterie n'est pas disponible, par exemple si l'état de charge SOC est saturé à sa valeur minimale. Dans ce cas, la baisse des performances se fait en gradient en fonction de la puissance batterie moyenne Pbat_moyenne, et la remontée au niveau nominal en fonction de l'état de charge SOC courant de la batterie.

De retour au procédé 1, les étapes suivant l'activation 110, 120 des premier et deuxième moyens de recharge vont alors se répéter après l'activation 130 du troisième moyen de recharge.

On met en pause le procédé pour une durée de temps prédéfinie de manière à laisser la batterie se recharger suite à l'activation 130 du troisième moyen de recharge, puis on procède à une étape de comparaison terminale 105 et à une étape de comparaison énergétique 104 avec une valeur de seuil de troisième niveau seuil_NRG_3 déterminée en fonction du troisième moyen de recharge activé et des deuxième et premier moyens de recharge activés.

De la même manière, on procède à l'activation 140 d'un quatrième moyen de recharge, si les trois moyens d'activation précédents ne permettent pas de restaurer un état de charge SOC suffisant pour la batterie.

Dans ce mode de réalisation le quatrième moyen de recharge comprend l'autorisation d'un niveau de recharge de la batterie augmenté par rapport au premier moyen de recharge.

Dans ce mode de réalisation, le quatrième moyen de recharge est le dernier moyen activable. Dès lors, on ne procède plus à une étape de comparaison énergétique 104. Seule l'étape de comparaison terminale est mise en œuvre jusqu'à ce que la batterie atteigne un état de charge SOC supérieur ou égal à l'état de charge cible SOC_{END}.

L'activation successive, et espacées dans le temps des différents moyens de recharge selon l'invention, permet notamment d'afficher au conducteur du véhicule automobile, via une interface homme-machine, des avertissements successifs quant à l'activation de moyens de recharge, qui peuvent notamment engendrer une baisse de l'agrément de conduite, de sorte que le conducteur est informé d'une modification temporaire de son confort de conduite, afin de restaurer l'état de charge de la batterie.

## Revendications

1. Procédé (1) de gestion de l'état de charge d'une batterie d'accumulateurs électriques d'un véhicule automobile hybride comprenant au moins une batterie d'accumulateurs électriques et un moteur thermique, ledit procédé (1) comprenant :
- une étape de réception (100) d'une valeur d'état de charge (SOC) de ladite batterie,
- une étape de comparaison de ladite valeur d'état de charge (SOC) avec une valeur de seuil minimum (SOC_{MIN});
le procédé (1) comprenant en outre une succession d'étapes d'activation (110, 120, 130, 140) de moyens de recharge aptes à augmenter ladite valeur d'état de charge (SOC) de la batterie,
chaque étape d'activation (110, 120, 130, 140) étant mise en œuvre, lorsque ladite valeur d'état de charge (SOC) est inférieure à ladite valeur de seuil minimum (SOC_{MIN}), en fonction d'une estimation d'une quantité d'énergie accumulée (NRJ_bat) par la batterie depuis l'activation du moyen de recharge activé au cours de l'étape d'activation (110, 120, 130, 140) précédente,
le procédé étant **caractérisé en ce que** deux mises en œuvre de deux étapes d'activation (110, 120, 130, 140) successives étant espacées d'une durée de recharge prédéfinie pour permettre à la batterie d'accumuler une quantité d'énergie (NRJ_bat) suite à l'activation du dernier moyen de recharge activé, la deuxième étape d'activation (120) active un deuxième moyen de recharge comprenant la baisse d'une valeur de seuil de régime minimum pour le crabotage du moteur thermique aux roues et/ou l'autorisation de modes de fonctionnement dégradés du moteur thermique, la première étape d'activation (110) activant un premier moyen de recharge comprenant l'augmentation d'un niveau de recharge de la batterie autorisé, la troisième étape d'activation (130) activant un troisième moyen de recharge comprenant une limitation progressive d'un paramètre commandant les performances de décharge de la batterie jusqu'à ce que ce paramètre atteigne une valeur de seuil minimale de performance de décharge.

2. Procédé selon la revendication 1, **caractérisé en ce qu'**une quatrième étape d'activation (140) active un quatrième moyen de recharge comprenant l'autorisation d'un niveau de recharge de la batterie augmenté par rapport au premier moyen de recharge.

3. Procédé selon l'une quelconque des revendications 1 à 2, **caractérisé en ce qu'**après la mise en œuvre d'une étape d'activation parmi la succession d'étapes d'activation, le procédé met en œuvre une autre étape de réception (100) d'une autre valeur d'état de charge (SOC) de ladite batterie, et une étape de comparaison terminale (105) entre ladite autre valeur d'état de charge reçue et une valeur de seuil cible (SOC_{END}) adaptée pour pouvoir désactiver l'ensemble des moyens de recharge activés en fonction de ladite autre valeur d'état de charge de ladite batterie.

4. Procédé selon la revendication 3, **caractérisé en ce que** ladite étape de comparaison terminale comprend la désactivation de l'ensemble des moyens de recharge précédemment activés lorsque l'autre valeur d'état de charge (SOC) est supérieure ou égale à ladite valeur de seuil cible (SOC_{END}).

5. Dispositif de gestion de l'état de charge d'une batterie d'accumulateurs électriques d'un véhicule automobile hybride comprenant au moins une batterie d'accumulateurs électriques et un moteur thermique, ledit dispositif comprenant :
- un organe de réception d'une valeur d'état de charge de ladite batterie,
- un organe de comparaison apte à comparer ladite valeur d'état de charge avec une valeur de seuil ;
- un organe d'estimation adapté pour estimer une valeur de quantité d'énergie accumulée par la batterie au cours d'une période de temps,
le dispositif de gestion comprenant un organe d'activation apte à activer successivement une pluralité de moyens de recharge, chaque activation d'un moyen de recharge (110, 120, 130, 140) étant fonction d'une quantité d'énergie accumulée (NRJ_bat) par la batterie, estimée par l'organe d'estimation, depuis l'activation précédente d'un autre moyen de recharge,
**caractérisé en ce que** deux activations successives d'un moyen de recharge (110, 120, 130, 140) étant espacées d'une durée de recharge prédéfinie pour permettre à la batterie d'accumuler une quantité d'énergie (NRJ_bat) suite à l'activation du dernier moyen de recharge activé, la première activation (110) d'un premier moyen de recharge comprenant l'augmentation d'un niveau de recharge de la batterie autorisé, la deuxième activation (120) d'un deuxième moyen de recharge comprenant la baisse d'une valeur de seuil de régime minimum pour le crabotage du moteur thermique aux roues et/ou l'autorisation de modes de fonctionnement dégradés du moteur thermique, la troisième activation (130) d'un troisième moyen de recharge comprenant une limitation progressive d'un paramètre commandant les performances de décharge de la batterie jusqu'à ce que ce paramètre atteigne une valeur de seuil minimale de performance de décharge.

6. Véhicule automobile hybride comprenant une batterie d'accumulateurs électriques, un moteur thermique et un dispositif de gestion selon la revendication 5.

## Patentansprüche

1. Verfahren (1) zur Verwaltung des Ladezustands einer Batterie aus elektrischen Akkumulatoren eines Hybridkraftfahrzeugs umfassend mindestens eine Batterie aus elektrischen Akkumulatoren und einen Verbrennungsmotor, das Verfahren (1) umfassend:
- einen Schritt des Empfangens (100) eines Ladezustands- (SOC-) Werts der Batterie,
- einen Schritt des Vergleichens des Ladezustands-(SOC-) Werts mit einem Minimalschwellenwert (SOC_{MIN}) ;
das Verfahren (1) ferner umfassend eine Abfolge von Schritten des Aktivierens (110, 120, 130, 140) von Wiederauflademitteln, die geeignet sind, den Ladezustands- (SOC-) Wert der Batterie anzuheben,
wobei jeder Aktivierungsschritt (110, 120, 130, 140) durchgeführt wird, wenn der Ladezustands- (SOC-) Wert niedriger als der Minimalschwellenwert (SOC_{MIN}) ist, in Abhängigkeit von einer Schätzung einer Menge Energie (NRJ_bat), die von der Batterie seit der Aktivierung des Wiederauflademittels akkumuliert wurde, das im Verlauf des vorigen Aktivierungsschritts (110, 120, 130, 140) aktiviert wurde,
wobei das Verfahren **dadurch gekennzeichnet ist, dass** zwei Durchführungen zweier aufeinanderfolgender Aktivierungsschritte (110, 120, 130, 140) um eine vorgegebene Wiederaufladedauer beabstandet sind, um es der Batterie zu gestatten, eine Energiemenge (NRJ_bat) nach der Aktivierung des letzten aktivierten Wiederauflademittels zu akkumulieren, der zweite Aktivierungsschritt (120) ein zweites Wiederauflademittel aktiviert, umfassend die Absenkung eines Minimaldrehzahl-Schwellenwerts zur Kopplung des Verbrennungsmotors mit den Rädern und/oder die Gestattung von verschlechterten Betriebsmodi des Verbrennungsmotors, wobei der erste Aktivierungsschritt (110) ein erstes Wiederauflademittel aktiviert, umfassend die Anhebung eines gestatteten Wiederaufladestands der Batterie, wobei der dritte Aktivierungsschritt (130) ein drittes Wiederauflademittel aktiviert, umfassend eine progressive Begrenzung eines Parameters, der die Entladeleistungen der Batterie steuert, bis dieser Parameter einen Entladeleistungs-Minimalschwellenwert erreicht.

2. Verfahren nach Anspruch 1, **dadurch gekennzeichnet, dass** ein vierter Aktivierungsschritt (140) ein viertes Wiederauflademittel aktiviert, umfassend die Gestattung eines Wiederaufladestands der Batterie, der im Vergleich zum ersten Wiederauflademittel angehoben ist.

3. Verfahren nach einem der Ansprüche 1 bis 2, **dadurch gekennzeichnet, dass** nach der Durchführung eines Aktivierungsschritts aus der Abfolge von Aktivierungsschritten das Verfahren einen anderen Schritt des Empfangens (100) eines anderen Ladezustands-(SOC-) Werts der Batterie durchführt, und einen Schritt des letzten Vergleichens (105) des anderen Ladezustandswerts mit einem Zielschwellenwert (SOC_{END}), der geeignet ist, die Gesamtheit der aktivierten Wiederauflademittel in Abhängigkeit von dem anderen Ladezustandswert der Batterie deaktivieren zu können.

4. Verfahren nach Anspruch 3, **dadurch gekennzeichnet, dass** der Schritt des letzten Vergleichens die Deaktivierung der Gesamtheit der Wiederauflademittel, die zuvor aktiviert wurden, wenn der andere Ladezustands-(SOC-) Wert größer als oder gleich dem Zielschwellenwert (SOC_{END}) ist, umfasst.

5. Vorrichtung zur Verwaltung des Ladezustands einer Batterie aus elektrischen Akkumulatoren eines Hybridkraftfahrzeugs umfassend mindestens eine Batterie aus elektrischen Akkumulatoren und einen Verbrennungsmotor, die Vorrichtung umfassend:
- ein Element zum Empfang eines Ladezustandswerts der Batterie,
- ein Vergleichselement, das geeignet ist, den Ladezustandswert mit einem Schwellenwert zu vergleichen;
- ein Schätzelement, das geeignet ist, einen Wert einer Energiemenge zu schätzen, die von der Batterie im Verlauf eines Zeitraums akkumuliert wurde,
die Verwaltungsvorrichtung umfassend ein Aktivierungselement, das geeignet ist, eine Mehrzahl von Wiederauflademitteln nacheinander zu aktivieren, wobei jede Aktivierung eines Wiederauflademittels (110, 120, 130, 140) von einer Menge Energie (NRJ_bat) abhängig ist, die von der Batterie akkumuliert wurde, die vom Schätzelement seit der vorigen Aktivierung eines anderen Wiederauflademittels geschätzt wird,
**dadurch gekennzeichnet, dass** zwei aufeinanderfolgende Aktivierungen eines Wiederauflademittels (110, 120, 130, 140) um eine vorgegebene Wiederaufladedauer beabstandet sind, um es der Batterie zu gestatten, eine Energiemenge (NRJ_bat) nach der Aktivierung des letzten aktivierten Wiederauflademittels zu akkumulieren, die erste Aktivierung (110) eines ersten Wiederauflademittels umfassend die Anhebung eines gestatteten Wiederaufladestands der Batterie, die zweite Aktivierung (120) eines zweiten Wiederauflademittels umfassend die Absenkung eines Minimaldrehzahl-Schwellenwerts zur Kopplung des Verbrennungsmotors mit den Rädern und/oder die Gestattung von verschlechterten Betriebsmodi des Verbrennungsmotors, die dritte Aktivierung (130) eines dritten Wiederauflademittels umfassend eine progressive Begrenzung eines Parameters, der die Entladeleistungen der Batterie steuert, bis dieser Parameter einen Entladeleistungs-Minimalschwellenwert erreicht.

6. Hybridkraftfahrzeug umfassend eine Batterie aus elektrischen Akkumulatoren, einen Verbrennungsmotor und eine Verwaltungsvorrichtung nach Anspruch 5.

## Claims

1. Method (1) for managing the state of charge of a battery of electric accumulators of a hybrid motor vehicle comprising at least one battery of electric accumulators and a combustion engine, said method (1) comprising:
- a step of receiving (100) a state of charge (SOC) value of said battery,
- a step of comparing said state of charge (SOC) value with a minimum threshold value (SOC_{MIN});
the method (1) further comprising a succession of steps of activation (110, 120, 130, 140) of charging means capable of increasing said state of charge (SOC) value of the battery,
each activation step (110, 120, 130, 140) being implemented, when said state of charge (SOC) value is lower than said minimum threshold value (SOC_{MIN}),
according to an estimate of an amount of energy accumulated (NRJ_bat) by the battery since the activation of the charging means activated in the preceding activation step (110, 120, 130, 140), the method being **characterized in that** two implementations of two successive activation steps (110, 120, 130, 140) are spaced apart by a predefined charging duration in order to allow the battery to accumulate an amount of energy (NRJ_bat) subsequent to the activation of the last charging means activated, the second activation step (120) activates a second charging means comprising the lowering of a minimum speed threshold value for the coupling of the combustion engine to the wheels and/or the authorization of degraded operating modes of the combustion engine, the first activation step (110) activating a first charging means comprising the increasing of an authorized charging level of the battery, the third activation step (130) activating a third charging means comprising a gradual limiting of a parameter controlling the discharging performance of the battery until this parameter reaches a minimum discharging performance threshold value.

2. Method according to Claim 1, **characterized in that** a fourth activation step (140) activates a fourth charging means comprising the authorization of a charging level of the battery that is increased relative to the first charging means.

3. Method according to either of Claims 1 and 2, **characterized in that** after the implementation of an activation step from among the succession of activation steps, the method implements another step (100) of receiving another state of charge (SOC) value of said battery, and a terminal comparison step (105) of comparing said other state of charge value received and a target threshold value (SOC_{END}) that is designed to be able to deactivate all of the charging means activated according to said other state of charge value of said battery.

4. Method according to Claim 3, **characterized in that** said terminal comparison step comprises the deactivation of all of the charging means previously activated when the other state of charge (SOC) value is higher than or equal to said target threshold value (SOC_{END}).

5. Device for managing the state of charge of a battery of electric accumulators of a hybrid motor vehicle comprising at least one battery of electric accumulators and a combustion engine, said device comprising:
- a member for receiving a state of charge value of said battery,
- a comparison member capable of comparing said state of charge value with a threshold value;
- an estimation member suitable for estimating a value of an amount of energy accumulated by the battery over a period of time,
the management device comprising an activation member capable of successively activating a plurality of charging means, each activation of a charging means (110, 120, 130, 140) being dependent on an amount of energy accumulated (NRJ_bat) by the battery, estimated by the estimation member, since the previous activation of another charging means, **characterized in that** two successive activations of a charging means (110, 120, 130, 140) are spaced apart by a predefined charging duration in order to allow the battery to accumulate an amount of energy (NRJ_bat) subsequent to the activation of the last charging means activated, the first activation (110) of a first charging means comprising the increasing of an authorized charging level of the battery, the second activation (120) of a second charging means comprising the lowering of a minimum speed threshold value for the coupling of the combustion engine to the wheels and/or the authorization of degraded operating modes of the combustion engine, the third activation (130) of a third charging means comprising a gradual limiting of a parameter controlling the discharging performance of the battery until this parameter reaches a minimum discharging performance threshold value.

6. Hybrid motor vehicle comprising a battery of electric accumulators, a combustion engine and a management device according to Claim 5.
